# FASCICULE DE BREVET EUROPEEN

(11) **EP 0 565 641 B1**
(45) Date de publication et mention de la délivrance du brevet: **12.04.1995**
(21) Numéro de dépôt: 92904572.2
(22) Date de dépôt: 03.01.1992
(51) Int. Cl.: H01R 9/05, F16L 33/02, B65D 63/08

(54) **DISPOSITIF DE RACCORDEMENT D'AU MOINS UNE TRESSE DE CABLES ELECTRIQUES SUR RACCORD**
ANSCHLUSSVORRICHTUNG FÜR EINE ELEKTRISCHE KABELBEFLECHTUNG AN EINEN ANSCHLUSS
DEVICE FOR CONNECTING AT LEAST ONE BRAID OF ELECTRIC CABLES TO A CONNECTOR

(30) Priorité: 04.01.1991 FR 9100091
(43) Date de publication de la demande: 20.10.1993
(73) Titulaire: AXON'CABLE S.A., 51210 Montmirail (FR)
(72) Inventeur: ROUCHAUD, Gilles, F-51210 Montmirail (FR)
(74) Mandataire: Dronne, Guy
(86) Numéro de dépôt international: FR9200004
(87) Numéro de publication internationale: WO9212552

(56) Documents cités:
- EP-A- 0 328 305
- WO-A-82/02035
- DE-C- 502 974
- GB-A- 805 763
- US-A- 3 067 640

## Description

La présente invention a pour objet un dispositif de raccordement d'au moins une tresse de câbles électriques sur un raccord.

De façon plus précise, l'invention concerne un dispositif du type collier permettant d'assurer le raccordement entre au moins une tresse de blindage d'un câble électrique sur un raccord arrière de connecteur sensiblement cylindrique dans des conditions électriques optimales.

Le but du raccordement des tresses de blindage d'un câble sur un raccord arrière de connecteur est d'assurer la continuité de blindage entre un câble blindé et un connecteur. L'efficacité de blindage peut être mesurée à l'aide de l'impédance de transfert de l'ensemble constitué par le blindage et le connecteur. L'impédance de transfert définit dans une plage de fréquence donnée la résistance de contact entre le blindage et le connecteur pour cette plage de fréquence. Les techniques de raccordement présentant une continuité électrique sur 360° offrent la meilleure impédance de transfert. Les raccordements par collier ou bande de serrage assurent généralement une bonne impédance de transfert, le contact étant très intime entre le raccord et la tresse de blindage sur une surface importante. De plus, ces dispositifs de serrage sont d'un montage aisé et s'adaptent facilement à une grande gamme de diamètres de connecteurs.

Les bandes ou colliers de serrage les plus couramment utilisés actuellement sont constitués d'une seule pièce et sont appliqués avec des pinces contrôlant le couple de serrage. La demande de brevet européen 0 328 305 montre un tel collier.

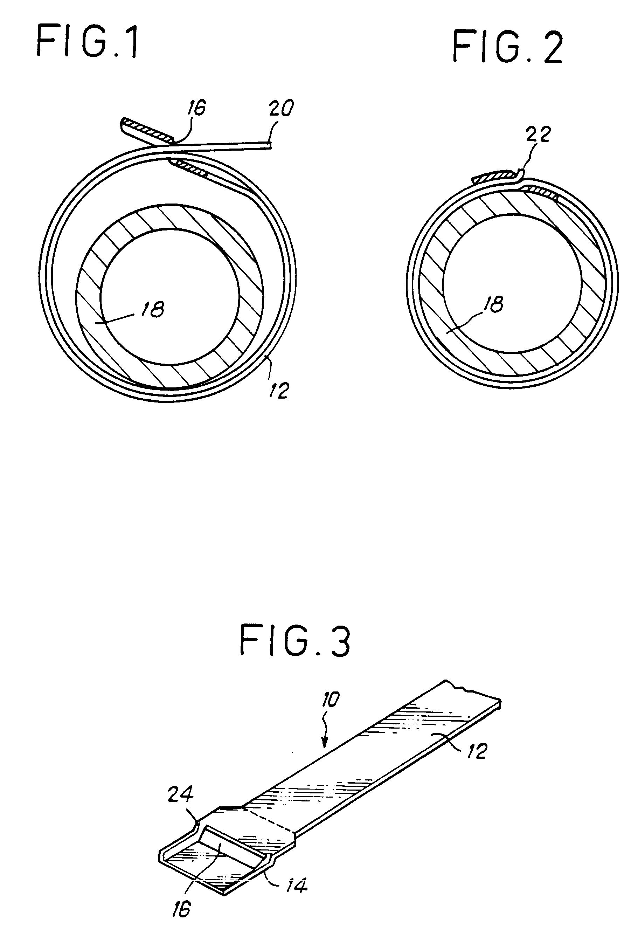

Pour rendre plus clair le problème à résoudre, les figures annexées 1 à 3 représentent un tel type de collier de serrage. Le collier 10 est essentiellement constitué par une bande métallique 12 de largeur constante dont une extrémité 14 se termine par une portion élargie et partiellement pliée, cette portion étant munie d'une fente 16. Comme le montre les figures 1 et 2 sur lesquelles on a représenté une tresse 18 à raccorder, la bande 12 entoure deux fois la pièce 18 à raccorder passant ainsi deux fois dans la fente 16. Pour assurer le raccordement on exerce une traction sur l'extrémité 20 de la bande 12 et on coupe à ras cette extrémité comme cela est visible en 22.

Un tel type de colliers de raccordement présente deux inconvénients principaux. D'une part, la partie élargie 14 entraîne un gaspillage de matières lors de la découpe de la bande dans le feuillard servant à réaliser une pluralité de colliers. En outre, la formation du collier nécessite des opérations de pliage. Il faut de plus remarquer que, dans la zone référencée 24 de la portion élargie 14 qui entoure la fente 16, l'épaisseur de métal est très réduite et de plus elle a été pliée. Il risque d'apparaître une amorce de rupture de la bande métallique dans cette zone lorsqu'on applique une force de serrage importance avec la pince de sertissage. Les expériences montrent que la rupture se produit aux environs de 100 kg de tension.

Le document US-A-3 067 640 décrit un système de fixation d'une bande de serrage. Mais ce système ne permet pas d'obtenir une continuité de serrage suffisante pour réaliser une connexion électrique. En outre, la pièce de fixation est épaisse.

Le document WO-A-82/02035 et le document GB-A-805 763 décrivent également des systèmes de serrage constitués par une bande et une pièce de fixation. Cependant, ces systèmes ne permettent ni un serrage suffisant, ni une surface de serrage assez continue pour réaliser une connexion électrique convenable.

Pour remédier à ces inconvénients, un objet de l'invention est de fournir un dispositif de raccordement du type précité qui soit d'une fabrication simple et peu onéreuse en évitant les problèmes de gaspillage de métal et qui, par ailleurs, présente une résistance mécanique suffisante pour pouvoir supporter les tensions de serrage suffisamment élevées pour assurer une bonne qualité de résistance de contact entre le raccord et la tresse de blindage.

Pour atteindre ce but, le dispositif de raccordement d'au moins une tresse de câble électrique sur un raccord sensiblement cylindrique assurant une résistance électrique de contact très faible selon l'invention comprenant d'une part, une bande métallique d'épaisseur e et de largeur 1 constante et, d'autre part, une pièce de fixation métallique, caractérisé en ce que ladite pièce de fixation est de forme générale sensiblement rectangulaire et sensiblement plane et qu'elle est munie d'un orifice définissant deux grands bords de longueur légèrement supérieure à la largeur 1 de la bande et deux petits bords d'une longueur comprise entre 6 et 10 fois l'épaisseur e de ladite bande, la première extrémité de ladite bande étant engagée dans ledit orifice et repliée sur un desdits grands bords de ladite pièce sur la face externe de ladite pièce et en ce que ladite bande est engagée deux fois dans ledit orifice et sa deuxième extrémité est repliée sur le deuxième grand bord de ladite pièce et sur la face externe de ladite pièce lorsque ladite bande enserre la tresse du câble.

On comprend que, grâce à l'invention, toute perte de métal est évitée puisque les bandes métalliques qui sont réalisées dans un premier feuillard ont une largeur constante et que les pièces de fixation métalliques sont découpées dans un deuxième feuillard et qu'elles ont elles-même une largeur constante. En outre, du fait qu'on évite tout pliage de la pièce de fixation, celle-ci ne présente pas d'amorce de rupture et permet donc d'exercer des forces de serrage suffisamment élevées pour obtenir une très bonne résistance de contact entre le raccord et la tresse de câble.

D'autres caractéristiques et avantages de la présente invention apparaîtront plus clairement à la lecture de la description qui suit d'un mode de réalisation de l'invention donné à titre d'exemple non limitatif. La description se réfère aux figures annexées sur lesquelles :
- la figure 1, déjà décrite, est une vue d'un collier de serrage, selon l'art antérieur, disposé autour d'une pièce à raccorder ;
- la figure 2, déjà décrite, est une vue semblable à la figure 1 montrant le collier de serrage après que l'opération de serrage ait été effectuée ;
- la figure 3, déjà décrite, est une vue partielle en perspective du collier de serrage des figres 1 et 2 ;
- la figure 4 est une vue en perspective de la bande métallique faisant partie du dispositif de raccordement selon l'invention ;
- la figure 5 est une vue de dessus de la pièce de fixation du dispositif de raccordement ;
- la figure 6 est une vue en coupe selon la ligne VI-VI de la figure 5 ;
- la figure 7 est une vue du dispositif de raccordement selon l'invention en phase de serrage ; et
- la figure 8 montre un dispositif de raccordement selon l'invention fixé autour d'une pièce.

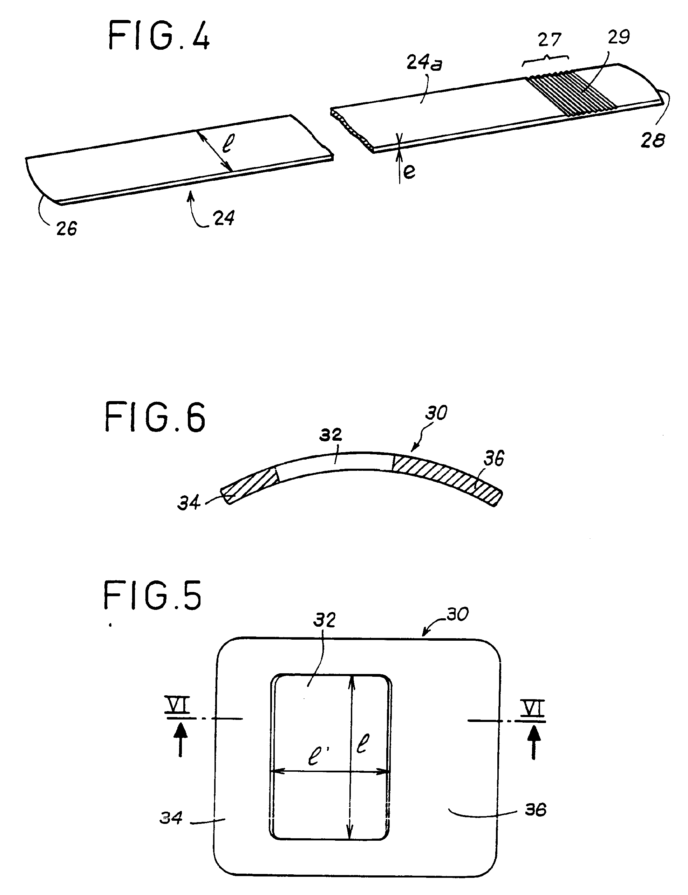

Comme on l'a déjà indiqué précédemment, le dispositif de raccordement d'au moins une tresse de câble électrique sur un raccord sensiblement cylindrique selon l'invention, ci-après appelé collier de raccordement, se compose d'une part d'une bande métallique, plus particulièrement représentée sur la figure 4, et d'une pièce de fixation ou chape, plus particulièrement représentée sur les figures 5 et 6.

La bande de serrage 24 est réalisée de préférence en acier inoxydable recuit. Elle présente une largeur constante 1 et une épaisseur également constante e, ses deux extrémités respectivement 26 et 28 sont légèrement arrondies. En outre, la face dite interne 24a de la bande est de préférence munie à proximité de son extrémité 28 d'une zone 27 pourvue de stries 29 de profondeur réduite disposée perpendiculairement à la longueur de la bande. Selon un mode préféré de réalisation la bande métallique 24 a une longueur de 370 mm, une épaisseur e de 0,5 mm et une largeur l de 6 mm. Les stries s'étendent sur une longueur de 10 mm laissant une longueur libre de l'ordre de 12 mm. Selon une variante de réalisation, la largeur l de la bande 24 est de 3,5 mm.

Si l'on se réfère maintenant aux figures 5 et 6, on voit que la chape 30 a la forme générale d'un rectangle dont les coins sont arrondis. La chape 30 est munie d'un orifice 32 dont la longueur, selon la direction perpendiculaire à la bande 24, est sensiblement égale à l et dont la largeur l′, selon la direction de la longueur de la bande 24, est comprise entre 6 et 10 fois l'épaisseur e de la bande 24. Selon la direction de la longueur de la bande 24, l'orifice 32 laisse demeurer dans la plaque 30 deux rebords 34 et 36, le rebord 34 ayant une longueur inférieure à celle du rebord 36. Comme le montre mieux la figure 6, la plaque formant la chape 30 est de préférence légèrement cambrée pour s'adapter plus facilement à la courbure de la tresse et de la pièce de raccord à raccorder entre elles.

Selon un mode préféré de réalisation, la chape 30 est fabriquée en acier inoxydable écroui et elle présente une longueur de 10 mm et une largeur de 9 mm. L'orifice 32 présente, lui, une longueur de 6 mm et une largeur l′ de 4 mm. Selon une variante de réalisation, l'orifice présente une longueur l égale à 3,6 mm. La chape présente une longueur de 8 mm et une largeur de 5,5 mm.

Il découle déjà de la description précédente que la réalisation respectivement de bande 24 et de chape 30 peut s'effectuer sans perte de métal par simple découpage dans des feuillards respectivement d'acier inoxydable écroui et d'acier inoxydable recuit. En effet, aussi bien la bande 24 que la chape 30 ont des largeurs constantes. En outre, la réalisation de la chape 30 ne nécessite aucune opération de pliage ou d'emboutissage supplémentaire. Seule une opération de cintrage peut être mise en oeuvre pour obtenir la forme de la chape représentée sur la figure 6. En outre, il est important de remarquer que, compte tenu de l'absence de pliage ou d'emboutissage, la chape 30 ne présente aucune amorce de rupture susceptible d'entraîner sa destruction lors du serrage de la bande 24 autour des pièces à raccorder.

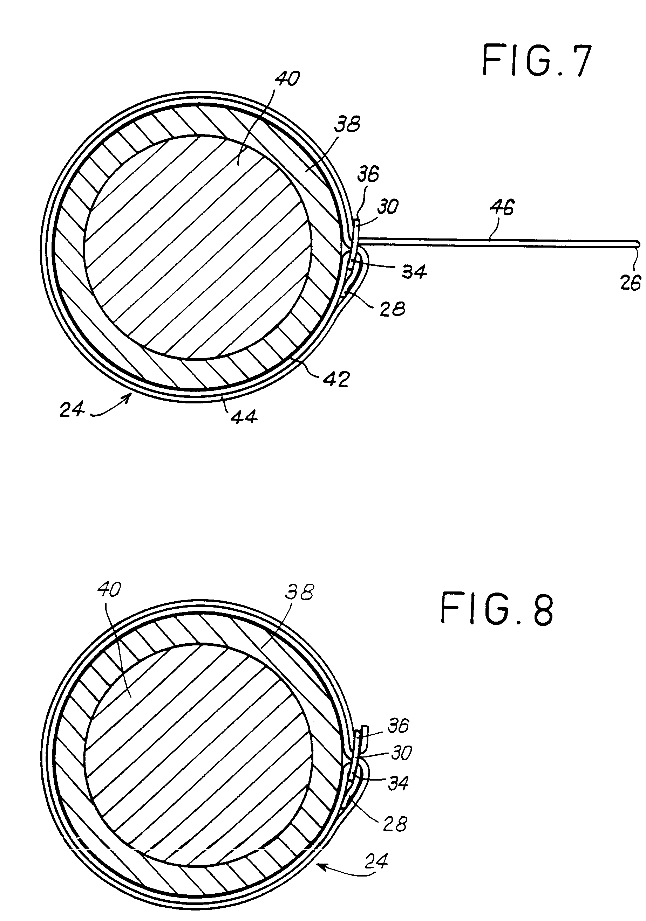

Les figures 7 et 8 montrent le serrage d'une tresse de blindage 38 sur un raccord arrière 40 à l'aide du collier de serrage selon l'invention. Comme le montre la figure 7, la première extrémité 28 de la bande 24 est engagée dans la fente 32 et repliée de façon à solidariser cette extrémité de la bande avec la chape 30. Plus précisément, l'extrémité 28 est repliée sur le bord le plus étroit 34 de la chape 30. Ce pliage est facilité par la présence des stries 29 dans la portion 27 de la bande. En outre, comme le montre les figures 7 et 8, l'extrémité 28 est disposée sur la face externe de la chape, c'est-à-dire celle qui n'est pas tournée vers le blindage 38. On obtient ainsi une meilleure continuité circonférentielle de serrage. La bande 24 fait un premier tour 40 autour de la tresse 38, passe une première fois dans l'orifice 32 puis forme une deuxième spire 44 autour de la tresse pour passer une deuxième fois dans l'orifice 32. La bande 24 en repassant au-dessus de sa première extrémité 28 assure le verrouillage de celle-ci sur la chape 30, même si des contraintes élevées lui sont appliquées. La bande 24 a une longueur suffisante pour laisser une extrémité libre 46 à l'extérieur de la chape 30, de longueur suffisante pour assurer une prise convenable à l'aide de la pince de sertissage. Une fois qu'à l'aide de cet instrument, on a exercé une traction contrôlée convenable, l'extrémité 46 de la bande 24 est repliée sur le rebord 36 de la chape 30 puis sectionnée comme le montre la figure 8.

A l'aide du dispositif selon l'invention, il est possible d'exercer une force de traction supérieure à 130 kg sur la bande 24 pour assurer le serrage convenable de la tresse sur le raccord. Au delà de cette force de traction, les tresses ont tendance à se déchirer. On remarque en outre que, grâce à la forme de la chape 30 et aux dimensions de l'orifice 32, la bande métallique est en contact avec la tresse sur un arc de cercle sensiblement égal à 360°.

Les essais effectués sur des tresses raccordées sur des raccords arrière à l'aide du collier de serrage selon l'invention ont montré que la résistance de contact en basse fréquence est inférieure à 0,4 milliOhms. La mesure de l'impédance de transfert de l'ensemble tresse de blindage/connecteur donne des résultats inférieurs et donc de bien meilleure qualité par rapport à ceux qui sont obtenus avec les techniques de reprise de blindage utilisées à ce jour.

## Revendications

1. Dispositif de raccordement d'au moins une tresse de câble (38) électrique sur un raccord sensiblement cylindrique (40) assurant une résistance électrique de contact très faible, comprenant d'une part une bande métallique (24) d'épaisseur (e) et de largeur (l) constantes et d'autre part une pièce de fixation (30) métallique, caractérisé en ce que ladite pièce de fixation est de forme générale sensiblement rectangulaire et sensiblement plane et qu'elle est munie d'un orifice définissant deux grands bords (34, 36) de longueur légèrement supérieure à la largeur (l) de la bande et deux petits bords de longueur comprise entre 6 et 10 fois l'épaisseur (e) de ladite bande, la première extrémité (28) de ladite bande étant engagée dans ledit orifice et repliée sur un desdits grands bords (34) de ladite pièce sur la face externe de ladite pièce et en ce que ladite bande est engagée deux fois dans ledit orifice et sa deuxième extrémité est repliée sur le deuxième grand bord (36) de ladite pièce et sur la face externe de ladite pièce lorsque ladite bande enserre ladite tresse de câble.

2. Dispositif selon la revendication 1, caractérisé en ce que ladite bande (24) est réalisée en acier inoxydable recuit et en ce que ladite pièce (30) est réalisée en acier inoxydable écroui.

3. Dispositif selon l'une quelconque des revendications 1 et 2, caractérisé en ce que ladite bande (24) a une épaisseur de l'ordre de 0,5 mm.

4. Dispositif selon l'une quelconque des revendications 1 à 3, caractérisé en ce que le bord (34) de ladite pièce sur lequel est repliée la première extrémité (28) de ladite bande a une largeur plus faible que l'autre bord (36).

5. Dispositif selon l'une quelconque des revendications 1 à 3, caractérisé en ce que la face interne de ladite bande (24) comporte une portion (27) munie de stries (29) perpendiculaires à sa longueur, à proximité de sa première extrémité (28) afin de faciliter le pliage de la bande sur la pièce de fixation.

## Patentansprüche

1. Anschlußvorrichtung für mindestens eine Beflechtung (38) eines elektrischen Kabels an einen im wesentlichen zylindrischen Anschluß (40), der einen sehr kleinen elektrischen Kontaktwiderstand gewährleistet, die einerseits ein Metallband (24) mit konstanter Dicke (e) und Breite (l) und andererseits ein metallisches Befestigungsteil (30) aufweist, dadurch gekennzeichnet, daß das Befestigungsteil als allgemeine Form im wesentlichen rechteckig und im wesentlichen flach ist und mit einer Öffnung versehen ist, die zwei große Ränder (34, 36), die eine Länge aufweisen, die geringfügig größer ist als die Breite (1) des Bands, und zwei kleine Ränder mit einer Länge, die zwischen 6 und 10mal die Dicke (e) des Bands beträgt, definiert, wobei das erste Ende (28) des Bands mit der Öffnung in Eingriff ist und auf einen der großen Ränder (34) des Teils auf der äußeren Fläche des Teils umgebogen ist, und dadurch, daß das Band zweimal mit der Öffnung in Eingriff ist und sein zweites Ende auf dem zweiten großen Rand (36) des Teils und auf die äußere Fläche des Teils umgebogen ist, wenn das Band die Kabelbeflechtung umschließt.

2. Vorrichtung nach Anspruch 1, dadurch gekennzeichnet, daß das Band (24) aus nichtoxidierendem Stahl und daß das Teil (30) aus nichtoxidierendem, geglühtem Stahl verwirklicht sind.

3. Vorrichtung nach Anspruch 1 oder 2, dadurch gekennzeichnet, daß das Band (24) eine Dicke der Größenordnung von 0,5 mm aufweist.

4. Vorrichtung nach einem der Ansprüche 1 bis 3, dadurch gekennzeichnet, daß der Rand (34) des Teils, auf den das erste Ende (28) des Bands umgebogen ist, eine geringere Breite als der andere Rand (36) aufweist.

5. Vorrichtung nach einem der Ansprüche 1 bis 3, dadurch gekennzeichnet, daß die innere Fläche des Bands (24) einen Abschnitt (27) aufweist, der mit Streifen (29), die rechtwinklig zu seiner Länge, in der Nähe seines ersten Endes (28) verlaufen, versehen ist, um das Umbiegen des Bands auf das Befestigungsteil zu vereinfachen.

## Claims

1. Device for connecting at least one braid of electric cables (38) to a substantially cylindrical connector (40) to ensure a very low electric contact resistance, comprising on the one hand, a metal band (24) of constant thickness (e) and width (l), and on the other hand, a fastening plate in metal (30), characterized in that said fastening part is of substantially rectangular general shape and substantially flat and in that it is provided with an orifice defining two edges (34, 36), of length slightly greater than the width (l) of the band, and of width comprised between 6 and 10 times the thickness (e) of said band, the first end (28) of said band being engaged in said orifice and backfolded on one of said edges (34) of said part on the external face thereof, and in that said band is engaged twice in said slot and its second end is backfolded on the second edge (36) of said part when said band is clamped around said braid of cables.

2. Device according to claim 1, characterized in that said band (24) is produced in annealed stainless steel and in that said said part (30) is produced in cold-hammered stainless steel.

3. Device according to any one of claims 1 and 2, characterized in that said band (24) has a thickness of about 0.5 mm.

4. Device according to any one of claims 1 to 3, characterized in that the edge (34) of said part on which the first end (28) of said band is backfolded has a width smaller than the other edge (36).

5. Device according to any one of claims 1 to 4, characterized in that the internal face of said band (24) comprises a portion (27) provided with striations (29) perpendicular to its length, proximate to its first end (28) in order to facilitate the backfolding of the band on the fastening part.
